(19) Europäisches Patentamt / European Patent Office / Office européen des brevets

(11) **EP 3 008 315 B1**

(12) **FASCICULE DE BREVET EUROPEEN**

(45) Date de publication et mention
de la délivrance du brevet:
**15.08.2018 Bulletin 2018/33**

(21) Numéro de dépôt: **14734888.2**

(22) Date de dépôt: **12.06.2014**

(51) Int Cl.:
*F02D 41/22* $^{(2006.01)}$    *F02D 41/24* $^{(2006.01)}$

(86) Numéro de dépôt international:
**PCT/FR2014/051428**

(87) Numéro de publication internationale:
**WO 2014/199086 (18.12.2014 Gazette 2014/51)**

(54) **PROCÉDÉ DE DIAGNOSTIC DE L'ÉTAT DE FONCTIONNEMENT D'INJECTEURS DE CARBURANT DANS UN MOTEUR À COMBUSTION INTERNE, MOTEUR À COMBUSTION INTERNE ET VÉHICULE AUTOMOBILE UTILISANT UN TEL PROCÉDÉ**

VERFAHREN ZUR DIAGNOSE DES BETRIEBSZUSTANDS VON KRAFTSTOFFINJEKTOREN IN EINER BRENNKRAFTMASCHINE, BRENNKRAFTMASCHINE UND KRAFTFAHRZEUG ZUR DURCHFÜHRUNG DES VERFAHRENS

METHOD FOR DIAGNOSING THE OPERATING CONDITION OF FUEL INJECTORS IN AN INTERNAL COMBUSTION ENGINE, INTERNAL COMBUSTION ENGINE AND MOTOR VEHICLE USING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2013 FR 1355453**

(43) Date de publication de la demande:
**20.04.2016 Bulletin 2016/16**

(73) Titulaire: **Renault S.A.S.**
**92100 Boulogne-Billancourt (FR)**

(72) Inventeur: **WALRAVE, Aymeric**
**F-91540 Mennecy (FR)**

(56) Documents cités:
**EP-A2- 0 860 600        EP-A2- 1 039 117**
**WO-A1-2011/146894      GB-A- 2 449 706**
**US-A1- 2010 147 058**

**Description**

DOMAINE TECHNIQUE AUQUEL SE RAPPORTE L'INVENTION

La présente invention concerne de manière générale le domaine des moteurs de véhicules automobiles et les méthodes de vérification du bon fonctionnement de ces moteurs. Les documents GB 2 449 706 A et EP 0 860 600 décrivent des méthodes de détermination de défaillance d'un système d'injection. La présente invention concerne en particulier un procédé de diagnostic de l'état de fonctionnement d'au moins trois groupes d'injecteurs de carburant adaptés respectivement à injecter du carburant dans un nombre correspondant de cylindres d'un moteur à combustion interne, ledit moteur à combustion interne comportant une ligne d'injection comprenant une pompe de carburant connectée auxdits groupes d'injecteurs *via* une rampe de distribution de carburant.

Elle concerne plus précisément un procédé de diagnostic permettant la détection d'un éventuel dysfonctionnement de l'un au moins desdits groupes d'injecteurs.

Elle concerne également un procédé de pilotage destiné à corriger les consignes de quantité de carburant à injecter de groupes d'injecteurs défectueux d'un moteur à combustion interne de véhicule automobile.

Elle concerne par ailleurs un ensemble d'injection de carburant pour un moteur à combustion interne adapté à mettre en oeuvre de tels procédés.

Elle concerne enfin un moteur à combustion interne équipé d'un tel ensemble d'injection de carburant et un véhicule automobile comportant un tel moteur à combustion interne.

ARRIERE-PLAN TECHNOLOGIQUE

On connaît notamment du document JP8338292 un moteur à combustion interne comportant :

- des cylindres,
- des tubulures d'entrée d'air frais dans chaque cylindre,
- des tubulures de sortie de gaz brûlés hors de chaque cylindre, qui débouchent dans une conduite d'échappement, et
- une ligne d'injection comprenant une pompe de carburant connectée à des injecteurs de carburant dans les cylindres.

Dans ce document JP8338292, il est prévu une sonde à oxygène dans chaque tubulure de sortie des gaz brûlés, pour analyser la composition chimique des gaz brûlés sortant de chaque cylindre.

Ce document JP8338292 enseigne alors un procédé de diagnostic permettant, en fonction de la composition chimique des gaz brûlés sortant de chaque cylindre, de détecter si l'un des injecteurs injecte, dans le cylindre correspondant, une quantité de carburant trop faible ou trop importante par rapport à la quantité d'air frais admis dans ce cylindre.

Le nombre de sondes à oxygène pouvant être important, la mise en oeuvre du procédé de diagnostic du document JP8338292 est complexe et s'avère coûteuse.

OBJET DE L'INVENTION

Afin de remédier à l'inconvénient précité de l'état de la technique, la présente invention propose un procédé de diagnostic facile à mettre en oeuvre et peu coûteux, permettant de déterminer qu'un groupe d'injecteurs présente une dérive de son débit d'injection par rapport aux autres groupes d'injecteurs.

Plus particulièrement, on propose un procédé de diagnostic de l'état de fonctionnement d'au moins trois groupes d'injecteurs de carburant adaptés respectivement à injecter du carburant dans un nombre correspondant de cylindres d'un moteur à combustion interne, ledit moteur à combustion interne comportant une ligne d'injection comprenant une pompe de carburant connectée auxdits groupes d'injecteurs *via* une rampe de distribution de carburant.

Selon l'invention, le procédé de diagnostic comporte :

- une première opération qui est mise en oeuvre pour chaque cylindre considéré et qui comprend des étapes consistant à :

  a) acquérir une valeur mesurée d'une première pression dans ladite rampe de distribution,
  b) injecter du carburant dans chaque cylindre considéré grâce au groupe d'injecteurs correspondant,
  c) estimer une valeur estimée d'une deuxième pression dans ladite rampe de distribution à l'issue de l'étape b), en fonction de ladite valeur mesurée de la première pression,
  d) acquérir une valeur mesurée de ladite deuxième pression,
  e) comparer ladite valeur estimée avec ladite valeur mesurée de la deuxième pression, et en déduire un coefficient d'erreur associé audit cylindre considéré, et

- une deuxième opération de comparaison desdits coefficients d'erreur associés auxdits cylindres et de détection d'un éventuel dysfonctionnement de l'un au moins desdits groupes d'injecteurs.

Ainsi, dans le cadre des normes réglementaires d'émission de polluants, le procédé de diagnostic permet d'identifier le ou les injecteurs dont le débit a dérivé.

Ce procédé de diagnostic peut être mis en oeuvre sans rajouter de sonde à oxygène à la sortie de chacun des cylindres après combustion et évacuation dans la ligne d'échappement.

D'autres caractéristiques non limitatives et avantageuses du procédé de diagnostic conforme à l'invention sont les suivantes :

- à l'étape b), chaque groupe d'injecteurs correspondant audit cylindre considéré injecte du carburant selon une consigne de quantité de carburant déterminée, et à l'étape e), ledit coefficient d'erreur associé audit cylindre considéré est fonction de la différence de ladite valeur estimée et de ladite valeur mesurée de ladite deuxième pression, et desdites consignes de quantité de carburant ;
- lors de l'étape e), on déduit de ladite comparaison un résultat intermédiaire qu'on mémorise dans un registre qui associe à chaque injection de carburant dans le cylindre considéré ledit résultat intermédiaire, et on déduit ledit coefficient d'erreur à partir d'au moins deux résultats intermédiaires obtenus pour ledit cylindre considéré et mémorisés dans ledit registre ;
- le procédé de diagnostic comporte une troisième opération d'enregistrement dans une mémoire informatique d'un indicateur du groupe d'injecteurs présentant un dysfonctionnement.

Le procédé de diagnostic trouve une application particulièrement avantageuse dans une stratégie de régulation des débits d'injection d'un moteur à combustion interne, permettant de compenser la dérive d'un groupe d'injecteurs défectueux pour recaler le débit d'injection dudit groupe d'injecteurs par rapport aux autres groupes d'injecteurs.

L'invention propose également un procédé de pilotage d'au moins trois groupes d'injecteurs de carburant adaptés respectivement à injecter du carburant dans un nombre correspondant de cylindres d'un moteur à combustion interne, ledit moteur à combustion interne comportant une ligne d'injection comprenant une pompe de carburant connectée auxdits groupes d'injecteurs *via* une rampe de distribution de carburant, ledit procédé de pilotage comportant des étapes consistant à :

i) élaborer pour chaque groupe d'injecteurs une consigne de quantité de carburant à injecter dans le cylindre correspondant,
ii) détecter un éventuel groupe d'injecteurs défectueux selon un procédé de diagnostic conforme à l'invention, et, si un groupe d'injecteurs défectueux est détecté,
iii) corriger, en fonction desdits coefficients d'erreur déduits lors dudit procédé de diagnostic de l'étape ii) précédente, les consignes de quantité de carburant dudit groupe d'injecteurs défectueux.

De manière avantageuse, lors de la deuxième opération du procédé de diagnostic mis en oeuvre à l'étape ii) du procédé de pilotage selon l'invention, on détermine, pour chaque cylindre considéré, un coefficient d'erreur relatif qui est égal au rapport entre le coefficient d'erreur dudit cylindre considéré et une valeur moyenne des coefficients d'erreurs de tous les groupes d'injecteurs, et lors de l'étape iii), on corrige lesdites consignes de quantité de carburant en fonction desdits coefficients d'erreur relatifs.

L'invention propose par ailleurs un ensemble d'injection de carburant pour un moteur à combustion interne comportant :

- au moins trois groupes d'injecteurs de carburant adaptés respectivement à injecter du carburant dans un nombre correspondant de cylindres,
- une ligne d'injection comprenant une pompe de carburant connectée auxdits groupes d'injecteurs *via* une rampe de distribution de carburant,
- des moyens de mesure de pression délivrant un signal relatif à la pression dans ladite rampe de distribution, et
- une unité électronique et informatique adaptée à :

  - commander ladite pompe de carburant,
  - commander lesdits groupes d'injecteurs pour que chaque groupe d'injecteurs injecte dans le cylindre correspondant du carburant selon une consigne de quantité de carburant déterminée, et
  - traiter le signal délivré par lesdits moyens de mesure de pression,

dans lequel ladite unité électronique et informatique est adaptée à mettre en oeuvre un procédé de diagnostic selon l'invention pour détecter un groupe d'injecteurs défectueux.

Dans un mode de réalisation particulier, ladite unité électronique et informatique est programmée pour corriger, en fonction desdits coefficients d'erreur, lesdites consignes de quantités de carburant de chaque groupe d'injecteurs défectueux détecté.

L'invention propose de plus un moteur à combustion interne comportant un ensemble d'injection de carburant conforme à l'invention et un nombre correspondant de cylindres.

L'invention propose enfin un véhicule automobile comportant un moteur à combustion interne tel que précité.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique partielle d'un moteur à combustion interne selon l'invention ;
- la figure 2A représente, en fonction du temps, les variations de la pression ainsi que les instants d'acquisition d'une valeur mesurée de cette pression dans la rampe de distribution de carburant du moteur à combustion interne de la figure 1 ;
- la figure 2B représente, en fonction du temps, les périodes de pompage de carburant dans le réservoir du moteur à combustion interne de la figure 1 ;
- la figure 2C représente, en fonction du temps, les périodes d'injection de carburant dans les cylindres du moteur à combustion interne de la figure 1 ;
- la figure 3 représente, en fonction du temps, des périodes d'injection de carburant dans les cylindres du moteur à combustion interne de la figure 1 lorsque ces périodes se superposent.

Dans la description qui va suivre, les termes « *amont* » et « *aval* » seront utilisés suivant le sens de l'écoulement du carburant, depuis le point de prélèvement du carburant jusqu'à leur injection dans les cylindres.

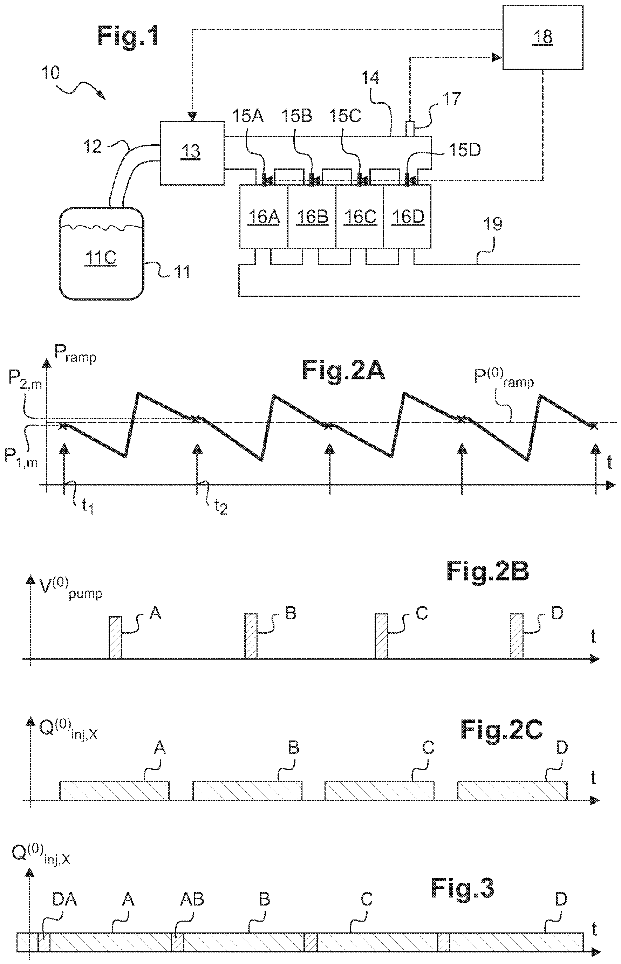

Sur la figure 1, on a représenté un mode de réalisation particulier d'un moteur à combustion interne (appelé ci-dessous « *moteur* » et référencé par le signe de référence 10) d'un véhicule automobile.

Ce moteur 10 est ici un moteur à allumage commandé (moteur dit *« essence »*).

En variante, le moteur du véhicule automobile pourrait être un moteur à allumage par compression (moteur dit *« diesel »*).

Le moteur 10 comporte ici quatre cylindres 16A, 16B, 16C, 16D indépendant les uns des autres. Par indépendant, on entend qu'à chaque cycle de combustion, l'injection de carburant est réalisée dans un seul cylindre à la fois.

Le moteur 10 du véhicule automobile comporte un ensemble d'injection de carburant dans les cylindres 16A, 16B, 16C, 16D.

Cet ensemble d'injection de carburant comprend un réservoir 11 de carburant adapté à stocker du carburant 11C sous forme liquide, ce carburant 11C étant destiné à alimenter le moteur 10 lors de son fonctionnement.

Le moteur 10 comporte également un circuit de carburant 12 à basse pression, connecté en amont au réservoir de carburant 11 et relié en aval à une ligne d'injection de carburant à haute pression de l'ensemble d'injection de carburant.

La ligne d'injection de carburant à haute pression comprend une pompe de carburant 13, qui est ici une pompe volumétrique. Cette pompe de carburant 13 est conçue pour prélever du carburant 11C dans le réservoir 11 afin de l'amener sous pression dans une rampe de distribution 14 de carburant de l'ensemble d'injection du moteur 10 après circulation au travers du circuit de carburant 12 à basse pression.

Par ailleurs, l'ensemble d'injection de carburant comporte également quatre groupes 15A, 15B, 15C, 15D d'injecteurs, chaque groupe comprenant ici un seul injecteur 15A, 15B, 15C, 15D de carburant.

Les quatre injecteurs 15A, 15B, 15C, 15D sont adaptés, respectivement, à injecter du carburant 11C dans les quatre cylindres 16A, 16B, 16C, 16D associés du moteur 10.

Plus précisément, les quatre injecteurs 15A, 15B, 15C, 15D présentent, chacun, d'une part, une entrée communiquant avec la rampe de distribution 14 à haute pression, et, d'autre part, une sortie débouchant dans leurs cylindres 16A, 16B, 16C, 16D respectifs.

Ainsi agencés, la pompe de carburant 13 est connectée aux injecteurs 15A, 15B, 15C, 15D *via* la rampe de distribution 14 de carburant.

Après combustion d'un mélange air/carburant 11C dans les quatre cylindres 16A, 16B, 16C, 16D (l'air étant amené jusqu'à chaque cylindre au moyen d'une ligne d'admission d'air), les gaz brûlés issus de cette combustion sont, en aval des cylindres 16A, 16B, 16C, 16D, évacués vers l'extérieur du véhicule automobile *via* une ligne d'échappement 19 du moteur 10 (voir figure 1).

Afin de mesurer la pression du carburant 11C à l'intérieur de la rampe de distribution 14, l'ensemble d'injection de carburant du moteur 10 comporte des moyens de mesure de pression délivrant un signal relatif à la pression de rampe $P_{ramp}$ dans la rampe de distribution 14, cette pression étant exprimée ici en pascal (Pa).

Ces moyens de mesure de pression comprennent ici une jauge de pression 17.

L'ensemble d'injection de carburant moteur 10 est par ailleurs équipé d'une unité électronique et informatique 18, encore appelé *« calculateur »*.

Cette unité électronique et informatique 18, ci-après dénommée par son abréviation UEI, est destinée à piloter l'ensemble d'injection de carburant du moteur 10 du véhicule automobile afin d'assurer son fonctionnement dans des conditions optimales prédéterminées (rendement maximal, consommation de carburant minimale, etc...).

Pour cela, l'UEI 18 comporte également un processeur (CPU), une mémoire vive (RAM), une mémoire morte (ROM), des convertisseurs analogiques-numériques (A/D), et différentes interfaces d'entrée et de sortie pour recevoir et transmettre des signaux en provenance ou en direction des différents organes du véhicule automobile.

Ainsi, l'UEI 18 reçoit, en provenance des différents organes du moteur 10, différentes informations pour les traiter. En particulier, l'UEI 18 reçoit des données relatives :

- à la quantité d'air admis dans les cylindres 16A, 16B, 16C, 16D du moteur 10 ;
- au régime-moteur ;
- à la composition chimique des gaz brûlés mesurée dans la ligne d'échappement 19, par exemple avec une sonde à oxygène.

On verra dans la suite de la description comment cette UEI 18 peut également être conçue et programmée afin de mettre en oeuvre un procédé de diagnostic pour détecter qu'un groupe d'injecteurs (dans le cas où il y a plusieurs injecteurs par cylindre), ou qu'un injecteur ici, est défectueux, et un procédé de pilotage permettant de corriger ses caractéristiques d'injection, tel que son débit ou son temps d'ouverture.

À cet effet, IUEI 18 est tout d'abord reliée à la jauge de pression 17 de manière que cette UEI 18 puisse acquérir un signal relatif à la pression de rampe $P_{ramp}$ dans la rampe de distribution 14 du moteur 10 du véhicule automobile.

L'UEI 18 traite alors le signal délivré par la jauge de pression 17 et commande la pompe de carburant 13 et les quatre injecteurs 15A, 15B, 15C, 15D, en fonction de ce signal et également des autres données reçues des différents organes du véhicule automobile.

Ainsi, l'UEI 18 commande la pompe de carburant 13 selon une consigne de volume de carburant $V^{(0)}_{pump}$ à pomper dans le réservoir 11 du moteur 10. En réponse à cette consigne de volume de carburant $V^{(0)}_{pump}$, la pompe de carburant 13 prélève un volume réel de carburant $V_{pump}$ dans le réservoir 11.

De manière générale, à cause des dérives et de la dispersion des réponses pour un grand nombre de pompes de carburant, le volume réel de carburant $V_{pump}$ prélevé par la pompe de carburant 13 est légèrement différent de la consigne de volume de carburant $V^{(0)}_{pump}$ déterminée par l'UEI 18. Typiquement, l'écart relatif entre le volume réel de carburant $V_{pump}$ et la consigne de volume de carburant $V^{(0)}_{pump}$ est inférieur à 10 %.

Comme expliqué précédemment, le volume réel de carburant $V_{pump}$ est alors transféré sous pression dans la rampe de distribution 14, dans laquelle la pression de rampe $P_{ramp}$ va varier.

Par ailleurs, l'UEI 18 commande chacun des quatre injecteurs 15A, 15B, 15C, 15D indépendamment les uns des autres, selon des consignes de quantité de carburant $Q^{(0)}_{inj,X}$ (avec X = A pour le premier injecteur 15A, X = B pour le deuxième injecteur 15B, etc) déterminées par l'UEI 18.

Chaque consigne de quantité de carburant $Q^{(0)}_{inj,X}$ correspond ici à une consigne relative à la quantité massique, exprimée en gramme (g) ou milligramme (mg), de carburant à injecter par chaque injecteur 15A, 15B, 15C, 15D à chaque cycle du moteur 10.

En réponse à chacune des consignes de quantité de carburant $Q^{(0)}_{inj,A}$, $Q^{(0)}_{inj,B}$, $Q^{(0)}_{inj,C}$, $Q^{(0)}_{inj,D}$, les quatre injecteurs 15A, 15B, 15C, 15D injectent, dans les cylindres 16A, 16B, 16C, 16D correspondants, une quantité réelle $Q_{inj,A}$, $Q_{inj,B}$, $Q_{inj,C}$, $Q_{inj,D}$ de carburant, exprimée également en g ou mg.

Ceci peut être visualisé sur la figure 2C où on a représenté, en fonction du temps t et pour un cycle complet du moteur 10 comprenant quatre injections successives dans les quatre cylindres 16A, 16B, 16C, 16D, les consignes de quantité de carburant $Q^{(0)}_{inj,X}$ (avec X = A, B, C, ou D) injectées respectivement par les quatre injecteurs 15A, 15B, 15C, 15D.

Cette injection de carburant dans les cylindres 16A, 16B, 16C, 16D du moteur 10 fait normalement chuter la pression de rampe $P_{ramp}$ de la rampe de distribution 14 de carburant, comme cela est illustré sur la figure 2A où on a représenté l'évolution de la pression de rampe $P_{ramp}$ en fonction du temps t.

De manière générale, il est préférable de limiter les amplitudes de variation de la pression de rampe $P_{ramp}$ de sorte que celle-ci s'écarte peu d'une consigne de pression de rampe $P^{(0)}_{ramp}$ déterminée par l'UEI 18, qui est dans le mode de réalisation considéré ici constante (voir tirets sur la figure 2A).

Pour compenser la perte de volume de carburant due aux injections, et donc la chute de pression dans la rampe de distribution 14, l'UEI 18 commande, de manière synchrone avec les injecteurs 15A, 15B, 15C, 15D, la pompe de carburant 13 selon la consigne de volume de carburant $V^{(0)}_{pump}$ (voir figure 2B) de manière à prélever un volume équivalent de carburant dans le réservoir 11 égal à la consigne de volume de carburant $V^{(0)}_{pump}$.

On montre d'ailleurs que la consigne de volume de carburant $V^{(0)}_{pump}$ à pomper est liée, pour une phase d'injection où l'injecteur 15X (avec X = A, B, C, ou D) reçoit une consigne de quantité de carburant $Q^{(0)}_{inj,X}$, à cette consigne de quantité de carburant $Q^{(0)}_{inj,X}$ par la relation :

$$V^{(0)}_{pump} = Q^{(0)}_{inj,X} / \rho_{carb}, \text{ (relation R1)}$$

où $\rho_{carb}$ est la masse volumique, exprimée en gramme par mètre-cube ($g/m^3$), du carburant utilisé.

De cette façon, on s'assure que le volume équivalent de carburant transféré dans la rampe de distribution 14 par la pompe de carburant 13 correspond à une quantité équivalente de carburant injectée dans le cylindre 16X par l'injecteur 15X (avec X = A, B, C, ou D).

Le transfert de carburant 11C dans la rampe de distribution 14 (on parle aussi de « *gavage* » de la rampe de distribution 14 par la pompe de carburant 13) permet ainsi, comme on le constate sur la figure 2A, de relever la pression de rampe $P_{ramp}$ lors de chaque phase d'injection par un injecteur 15A, 15B, 15C, 15D dans le cylindre 16A, 16B, 16C, 16D correspondant. La pression de rampe $P_{ramp}$ varie donc de manière peu importante et reste plus proche de la consigne de pression de rampe $P^{(0)}_{ramp}$.

Comme expliqué précédemment, d'un côté, les injecteurs 15A, 15B, 15C, 15D injectent, chacun, une quantité réelle $Q_{inj,X}$ (avec X = A, B, C, ou D) différente de la consigne de quantité de carburant $Q^{(0)}_{inj,X}$ déterminée par l'UEI 18, et, d'un autre côté, la pompe de carburant 13 prélève et transfère, lors de chaque phase d'injection par l'un des injecteurs 15A, 15B, 15C, 15D, un volume réel de carburant $V_{pump}$ différent de la consigne de volume de carburant $V^{(0)}_{pump}$ déterminée également par l'UEI 18.

Ces différences proviennent de différents défauts ou problèmes dans le moteur 10 ou ses différents organes, par exemple :

- un défaut de mesure de pression sur la jauge de pression 17 ;
- une fuite permanente d'un ou plusieurs injecteurs 15A, 15B, 15C, 15D ;
- une dérive d'une ou plusieurs caractéristiques de l'un des injecteurs 15A, 15B, 15C, 15D, comme son débit ou son temps d'ouverture ;
- un défaut de la pompe de carburant 13 ; ou
- une fuite, interne ou externe, de la pompe de carburant 13 ou de la rampe de distribution 14.

C'est justement l'un des objectifs de l'invention que de détecter qu'un ou plusieurs injecteurs présentent un dysfonctionnement, en particulier une dérive de la quantité de carburant injectée par le ou les injecteurs défectueux dans le ou les cylindres correspondants.

Plus précisément, on propose selon l'invention un procédé de diagnostic permettant d'identifier qu'un injecteur défaillant n'injecte pas le carburant de la même manière que les autres injecteurs du moteur suite à une quelconque altération de ses caractéristiques d'injection.

On propose également un procédé de pilotage visant à compenser les dérives de débit estimées sur chaque injecteur afin de limiter les différences de richesse du mélange air / carburant admis dans les différents cylindres, au cours de la vie du moteur.

PROCEDE DE DIAGNOSTIC

On va tout d'abord détailler ci-dessous un mode de réalisation préféré d'un procédé de diagnostic comportant trois opérations successives, dont la première est constituée de cinq étapes.

Cette première opération est répétée pour chacun des quatre cylindres 16A, 16B, 16C, 16D du moteur 10 du véhicule automobile.

Ici, on considérera que les cycles-moteurs des quatre cylindres 16A, 16B, 16C, 16D se suivent dans l'ordre suivant : premier cylindre 16A, deuxième cylindre 16B, troisième cylindre 16C, quatrième cylindre 16D.

On décrira ci-dessous la première opération mise en oeuvre pour le premier cylindre 16A et le premier injecteur 15A correspondant, les premières opérations mise en oeuvre pour les autres cylindres 16B, 16C, 16D s'en déduisant sans difficulté.

Ainsi, la première opération comprend les cinq étapes suivantes.

La première étape est une étape d'acquisition. Au cours de cette étape, grâce à la jauge de pression 17, l'UEI 18 acquiert une valeur mesurée $P_{1,m}$ d'une première pression dans la rampe de distribution 14. Cette première pression correspond à la pression de rampe $P_{ramp}(t_1)$ régnant dans la rampe de distribution 14, à un premier instant $t_1$ (voir figure 2A) qui est antérieur à la phase d'injection du premier injecteur 15A dans le premier cylindre 16A et qui est postérieur à la précédente phase d'injection du quatrième injecteur 15D dans le quatrième cylindre 16D du moteur 10 (au cycle-moteur précédent).

La deuxième étape est une étape d'injection. Au cours de cette étape, l'UEI 18 commande le premier injecteur 15A de manière qu'il injecte du carburant 11C dans le premier cylindre 16A, selon la consigne de quantité de carburant $Q^{(0)}_{inj,A}$.

Comme expliqué précédemment, la quantité réelle $Q_{inj,A}$ injectée par le premier injecteur 15A dans le premier cylindre 16A lors de cette deuxième étape est différente de la consigne de quantité de carburant $Q^{(0)}_{inj,A}$ à cause notamment d'une éventuelle dérive de débit de ce premier injecteur 15A.

La troisième étape est une étape d'estimation. Au cours de cette étape, l'UEI 18 estime une valeur estimée $P_{2,e}$ d'une deuxième pression dans la rampe de distribution 14 à l'issue de la deuxième étape. Cette deuxième pression correspond à la pression de rampe $P_{ramp}(t_2)$ régnant dans la rampe de distribution 14, à un deuxième instant $t_2$ (voir figure 2A) qui est postérieur à la phase d'injection du premier injecteur 15A dans le premier cylindre 16A du moteur 10.

Cette valeur estimée $P_{2,e}$ est calculée en fonction de la valeur mesurée $P_{1,m}$ de la première pression $P_{ramp}(t_1)$. On peut montrer, par le calcul, que cette valeur estimée $P_{2,e}$ s'exprime par la relation :

$$P_{2,e} = P_{1,m} + [V^{(0)}_{pump} - Q^{(0)}_{inj,A} / \rho_{carb}] * (\chi / V_{ramp}), \text{ (relation R2)}$$

où c et $V_{ramp}$ représentent, respectivement, la compressibilité, exprimée en pascal (Pa), et le volume, exprimé en mètre cube ($m^3$), du système haute pression qui regroupe ici la rampe de distribution 14 et les parties « haute pression » de la pompe de carburant 13 et des injecteurs 15A, 15B, 15C, 15D.

La quatrième étape est une étape d'acquisition qui peut être mise en oeuvre simultanément avec la troisième étape, ou directement avant celle-ci, mais toujours après la deuxième étape d'injection.

Au cours de la quatrième étape, l'UEI 18 acquiert, au deuxième instant $t_2$, toujours grâce à la jauge de pression 17, une valeur mesurée $P_{2,m}$ de la deuxième pression $P_{ramp}(t_2)$ dans la rampe de distribution 14.

La cinquième étape est une étape de comparaison. Au cours de cette étape, l'UEI 18 compare la valeur estimée $P_{2,e}$ avec la valeur mesurée $P_{2,m}$ de la deuxième pression de manière à évaluer dans quelle mesure la quantité réelle de carburant $Q_{inj,A}$ injectée par le premier injecteur 15A dans le premier cylindre 16A du moteur 10 s'écarte de la consigne de quantité de carburant $Q^{(0)}_{inj,A}$ transmise par l'UEI 18 à ce premier injecteur 15A lors de l'étape b) d'injection.

Plus précisément, lors de cette cinquième étape, l'UEI 18 évalue la différence entre la valeur estimée $P_{2,e}$ et la valeur mesurée $P_{2,m}$ de la deuxième pression afin de déterminer une masse de carburant $\varepsilon_{carb}$, exprimée en g ou mg, en excès ou en défaut.

Cette masse de carburant $\varepsilon_{carb}$ correspond à la masse de carburant injectée, en plus ou en moins, par le premier injecteur 15A dans le premier cylindre 16A du moteur 10 par rapport à la consigne de quantité de carburant $Q(0)_{inj,A}$ déterminée par l'UEI 18.

Cette masse de carburant $\varepsilon_{carb}$, en excès ou en défaut, peut s'exprimer selon la formule : $\varepsilon_{carb} = \rho_{carb} * [P_{2,e} - P_{2,m}] * (V_{ramp} / \chi)$.

L'UEI 18 déduit ensuite un coefficient d'erreur $\alpha_{inj,A}$ associé au premier cylindre 16A.

Dans le mode de réalisation préféré du procédé de diagnostic selon l'invention, la masse de carburant $\varepsilon_{carb}$ est de manière avantageuse rapportée à la consigne de quantité de carburant $Q^{(0)}_{inj,A}$ à injecter.

Le coefficient d'erreur $\alpha_{inj,A}$ se déduit donc de la relation suivante :

$$\alpha_{inj,A} = \varepsilon_{carb} / Q^{(0)}_{inj,A} \text{ (relation R3).}$$

Ce coefficient d'erreur $\alpha_{inj,A}$ traduit ainsi le décalage de débit d'injection du premier injecteur 15A sous la forme d'un rapport.

En réalisant cette première opération pour chacun des trois autres injecteurs 15B, 15C, 15D, on en déduit trois autres coefficients d'erreur $\alpha_{inj,B}$, $\alpha_{inj,C}$, $\alpha_{inj,D}$ relatifs respectivement au deuxième, troisième et quatrième cylindres 16B, 16C, 16D du moteur 10 du véhicule automobile.

L'UEI 18 met alors en oeuvre la deuxième opération du procédé de diagnostic.

Les différents coefficients d'erreur $\alpha_{inj,A}$, $\alpha_{inj,B}$, $\alpha_{inj,C}$, $\alpha_{inj,D}$ proviennent de différents défauts ou problèmes (voir liste ci-dessus) dans le moteur 10 ou ses différents organes.

De manière générale, un défaut de mesure de pression n'a aucun effet sur les coefficients d'erreur $\alpha_{inj,X}$ (avec X = A, B, C, ou D).

De la même manière, une fuite permanente d'un ou plusieurs injecteurs 15A, 15B, 15C, 15D, un défaut de la pompe de carburant 13, ou une fuite sur la pompe de carburant 13 ou la rampe de distribution 14, se ressent de la même manière sur tous les coefficients $\alpha_{inj,X}$. On entend par là que la dispersion des valeurs des coefficients d'erreur $\alpha_{inj,A}$, $\alpha_{inj,B}$, $\alpha_{inj,C}$, $\alpha_{inj,D}$ dans ce cas est négligeable.

En revanche, la dérive d'une ou plusieurs caractéristiques (volume injecté, temps d'ouverture, etc) de l'un des injecteurs 15A, 15B, 15C, 15D se ressent uniquement sur le coefficient d'erreur $\alpha_{inj,X}$ du seul injecteur défaillant.

Ainsi, lors de cette deuxième opération, en comparant entre eux les coefficients d'erreur $\alpha_{inj,A}$, $\alpha_{inj,B}$, $\alpha_{inj,C}$, $\alpha_{inj,D}$ associés à chaque injecteur 15A, 15B, 15C, 15D et à chaque cylindre 16A, 16B, 16C, 16D du moteur 10, par exemple en évaluant l'écart de chacun d'eux par rapport à une valeur moyenne des coefficients d'erreur $\alpha_{inj,X}$, l'UEI 18 peut détecter un éventuel dysfonctionnement de l'un au moins des injecteurs 15A, 15B, 15C, 15D.

Par exemple, si tous les coefficients d'erreur $\alpha_{inj,A}$, $\alpha_{inj,B}$, $\alpha_{inj,C}$, $\alpha_{inj,D}$ s'écartent d'au plus 5% de leur valeur moyenne, l'UEI 18 ne détecte aucun dysfonctionnement des injecteurs 15A, 15B, 15C, 15D. Si l'un des coefficients d'erreur $\alpha_{inj,A}$, $\alpha_{inj,B}$, $\alpha_{inj,C}$, $\alpha_{inj,D}$, par exemple le coefficient d'erreur $\alpha_{inj,A}$ du premier injecteur 15A, présente une valeur qui est supérieure d'au moins 5 % à la valeur moyenne des coefficients d'erreur $\alpha_{inj,A}$, $\alpha_{inj,B}$, $\alpha_{inj,C}$, $\alpha_{inj,D}$, l'UEI 18 détecte que le premier injecteur 15A présente un dysfonctionnement et est défaillant.

La première et la deuxième opérations peuvent être réalisées à chaque cycle du moteur 10, c'est-à-dire pour les quatre phases successives d'injection des injecteurs 15A, 15B, 15C, 15D dans les quatre cylindres 16A, 16B, 16C, 16D.

On peut ainsi, à chaque cycle, détecter si un ou plusieurs injecteurs 15A, 15B, 15C, 15D sont défaillants.

Cependant, en variante, afin d'évaluer la dérive dans le temps de la consigne de quantité de carburant $Q^{(0)}_{inj,X}$ de l'un des injecteurs 15A, 15B, 15C, 15D, il est préférable de déterminer les coefficients d'erreur $\alpha_{inj,X}$ sur plusieurs cycles du moteur 10 de manière à effectuer un filtrage temporel destiné à éliminer les variations rapides de ces coefficients d'erreur $\alpha_{inj,X}$, dues aux diverses perturbations subies par le moteur 10 et plus particulièrement celles présentes sur la mesure de la pression de rampe $P_{ramp}$.

En effet, la dérive des injecteurs est, elle, reliée à une variation lente desdits coefficients d'erreur $\alpha_{inj,X}$.

Ainsi, dans une variante de réalisation particulièrement avantageuse, lors de la cinquième étape de la première opération, l'UEI 18 déduit de la comparaison entre la valeur estimée $P_{2,e}$ et la valeur mesurée $P_{2,m}$ de la deuxième pression un résultat intermédiaire, puis l'UEI 18 mémorise celui-ci dans un registre de base de données qui associe à chaque injection de carburant dans le cylindre 16A, 16B, 16C, 16D considéré (c'est-à-dire à chaque temps t) le résultat intermédiaire.

Ce résultat intermédiaire peut, par exemple, être formé par le coefficient d'erreur $\alpha_{inj,X}$ (X = A, B, C, ou D).

Dans la suite, on notera :

- $t_{X,k}$ le $k$-ième instant ($k$ étant un entier naturel non nul) auquel l'UEI 18 acquiert, grâce à la jauge de pression 17, la valeur mesurée $P_{1,m}$ de la pression de rampe $P_{ramp}(t_{X,k})$ avant la phase d'injection de l'injecteur 15X (avec X = A, B, C, ou D), et
- $T_{cycle}$ la durée, exprimée en seconde(s) ou milliseconde (ms), d'un cycle-moteur comprenant quatre phases successives d'injection dans les cylindres 16A, 16B, 16C, 16D du moteur 10.

Ainsi, on a la relation suivante : $t_{X,k+1} = t_{X,k} + T_{cycle}$.

Afin d'effectuer un filtrage temporel, par exemple un filtrage discret d'ordre un, sur les coefficients d'erreur $\alpha_{inj,X}$ des différents injecteurs 15A, 15B, 15C, 15D, l'UEI 18 calcule, pour chaque instant $t_{X,k}$, des coefficients d'erreur filtrés $\alpha'_{inj,X}(t_{X,k})$ par la relation :

$$\alpha'_{inj,X}(t_{X,k}) = \alpha'_{inj,X}(t_{X,k-1}) + K *[\alpha_{inj,X}(t_{X,k}) - \alpha'_{inj,X}(t_{X,k-1})],$$

où le coefficient K de filtrage est une constante comprise entre 0 et 1 de la forme : $K = 1 - exp(-T_0/\tau)$ (exp = fonction exponentielle) où $T_0$ et $\tau$, exprimés en seconde, sont respectivement la période d'échantillonnage du filtre utilisé et le temps de réponse de ce filtre.

La période d'échantillonnage $T_0$ est ici égale à la durée de cycle $T_{cycle}$.

Le temps de réponse $\tau$ du filtre discret d'ordre 1 est choisi de manière à atténuer, dans le spectre en fréquence du signal non filtré $\alpha(t)$, formé à partir des différentes valeurs $\alpha_{inj,X}(t_{X,k})$, les fréquences élevées qui sont supérieures à $1/\tau$.

De cette manière, le spectre en fréquence du signal filtré $\alpha'(t)$, formé à partir des différentes valeurs $\alpha'_{inj,X}(t_{X,t})$, contient majoritairement des fréquences basses, liées aux variations lentes des coefficients d'erreur $\alpha_{inj,X}$. Les coefficients d'erreur filtrés $\alpha'_{inj,X}(t_{X,k})$ reflètent donc mieux les éventuelles dérives des injecteurs 15A, 15B, 15C, 15D.

On déduit ainsi le coefficient d'erreur $\alpha_{inj,X}$ associé à un injecteur 15X (avec X = A, B, C, ou D) à partir d'au moins deux résultats intermédiaires obtenus pour le cylindre 16X considéré et mémorisés dans le registre de base de données.

Enfin, on détecte lors de la deuxième opération un éventuel dysfonctionnement de l'un au moins des injecteurs 15A, 15B, 15C, 15D à partir de la comparaison des coefficients d'erreur filtrés $\alpha'_{inj,X}$, par exemple en évaluant l'écart de chacun d'eux par rapport à une valeur moyenne des coefficients d'erreur filtrés $\alpha'_{inj,X}$.

Quoi qu'il en soit, dans le mode de réalisation préféré du procédé de diagnostic, l'UEI 18 enregistre ensuite, lors d'une troisième opération, un indicateur du ou des injecteurs 15A, 15B, 15C, 15D présentant un dysfonctionnement dans une mémoire informatique.

Cet indicateur peut alors être utilisé :

- soit pour informer un conducteur du véhicule automobile présentant un injecteur défectueux grâce à la transmission par l'UEI 18 de l'indicateur à un dispositif d'information du conducteur (témoin lumineux, alarme sonore, signal vibratoire, etc...),
- soit pour permettre à un professionnel, équipé d'un moyen de lecture de la mémoire informatique de l'UEI 18, d'identifier facilement l'injecteur défectueux en vue de son remplacement.

On vient de voir que le procédé de diagnostic permettait d'identifier que l'un au moins des injecteurs 15A, 15B, 15C, 15D du moteur 10 était défectueux, à partir de la comparaison des différents coefficients d'erreur $\alpha_{inj,X}$ obtenus pour chaque injecteur 15A, 15B, 15C, 15D (ou chaque groupe d'au moins un injecteur).

On va voir désormais qu'il est possible de mettre à profit ce procédé de diagnostic pour mettre en oeuvre un procédé de pilotage des différents injecteurs 15A, 15B, 15C, 15D afin de compenser les dérives de leurs débits d'injection au cours du temps.

On décrit ci-après un tel procédé de pilotage, ce procédé comportant trois étapes, notées i) à iii), dont l'une d'entre elles (l'étape ii) englobe le procédé de diagnostic précité.

PROCEDE DE PILOTAGE

Au cours de l'étape i), l'UEI 18 élabore pour chaque injecteur 15A, 15B, 15C, 15D la consigne de quantité de carburant $Q^{(0)}_{inj,X}$ (avec X = A, B, C, ou D) à injecter dans le cylindre 16A, 16B, 16C, 16D correspondant.

Puis, lors de cette étape, l'UEI 18 commande chaque injecteur 15A, 15B, 15C, 15D selon la consigne de quantité de carburant $Q^{(0)}_{inj,X}$ élaborée, cette consigne de quantité de carburant $Q^{(0)}_{inj,X}$ étant notamment fonction, pour un cycle-moteur donné, des coefficients d'erreur $\alpha_{inj,X}$ déterminés lors du cycle-moteur précédent.

Au cours de l'étape ii), l'UEI 18 détecte si un injecteur 15A, 15B, 15C, 15D est défectueux en mettant en oeuvre le procédé de diagnostic décrit précédemment.

L'UEI 18 détermine pour cela, lors de la deuxième opération du procédé de diagnostic, pour chaque cylindre 16A, 16B, 16C, 16D considéré, un coefficient d'erreur relatif $\beta_{inj,X}$ (X = A, B, C, ou D) qui est égal au rapport entre :

- le coefficient d'erreur $\alpha_{inj,X}$, de l'injecteur 15A, 15B, 15D, 15D correspondant au cylindre 16A, 16B, 16C, 16D considéré, et
- une valeur moyenne $\alpha_m$ des coefficients d'erreur $\alpha_{inj,X}$ de tous les injecteurs 15A, 15B, 15C, 15D.

En d'autres termes, on a la relation suivante pour chaque coefficient d'erreur relatif $\beta_{inj,X}$ : $\beta_{inj,X} = \alpha_{inj,X} / \alpha_m$ (X = A, B, C, ou D).

La valeur moyenne $\alpha_m$ peut être par exemple la moyenne arithmétique des coefficients d'erreur $\alpha_{inj,X}$ de tous les injecteurs 15A, 15B, 15C, 15D : $\alpha_m = (\alpha_{inj,A} + \alpha_{inj,B} + \alpha_{inj,C} + \alpha_{inj,D}) / Nb_{cyl}$, où $Nb_{cyl}$ est le nombre de cylindres du moteur 10 du véhicule automobile ($Nb_{cyl} = 4$ ici).

Le coefficient d'erreur relatif $\beta_{inj,X}$ reflète l'erreur observée sur la caractéristique de l'injecteur 15X (X = A, B, C, ou D) relative à la moyenne des erreurs sur chaque cylindre 16A, 16B, 16C, 16D.

Au cours de l'étape iii), l'UEI 18 corrige, en fonction des coefficients d'erreur $\alpha_{inj,X}$, les consignes de quantité de carburant $Q^{(0)}_{inj,X}$ de l'injecteur 15A, 15B, 15C, 15D défectueux détecté lors de l'étape ii).

Dans un mode de réalisation préféré, cette correction est réalisée en fonction des coefficients d'erreur relatifs $\beta_{inj,X}$.

Plus précisément, l'UEI 18 détermine, pour le prochain cycle-moteur, la consigne de quantité de carburant $Q^{(0)}_{inj,X}$[prochain cycle-moteur] de l'injecteur 15X défectueux comme étant égale au produit :

- de la consigne de quantité de carburant $Q^{(0)}_{inj,X}$[cycle-moteur actuel] de l'injecteur défectueux pour le cycle-moteur actuel, et
- du terme correctif $(1 + \beta_{inj,X})$.

En d'autres termes, on a la relation suivante entre la consigne de quantité de carburant $Q^{(0)}_{inj,X}$ [prochain cycle-moteur] et la consigne de quantité de carburant $Q^{(0)}_{inj,X}$ [cycle-moteur actuel] :

$$Q^{(0)}_{inj,X} \text{ [prochain cycle-moteur]} = (1+\beta_{inj,X}) * Q^{(0)}_{inj,X} \text{ [cycle-moteur actuel]},$$

avec X = A, B, C, ou D.

Ceci permet alors de compenser la dérive de caractéristique observée sur l'injecteur défectueux.

Du fait de la nature inexacte de la référence choisie sur les coefficients d'erreur $\alpha_{inj,X}$ (simple moyenne arithmétique) et du fait qu'il n'est pas possible de simplement identifier, sur chacun des ces coefficients d'erreur, la part uniquement liée à un problème de caractéristique-injecteur, il est probable que la stratégie décrite ci-dessus n'induise une dérive d'injection sur des injecteurs sains mais au profit d'une réduction de la dispersion d'injection entre chaque cylindre. Une fois cette dispersion réduite par cette stratégie, il est capital que les stratégies déjà existantes de régulation de richesse compensent cette potentielle dérive homogène du système.

Par ailleurs, il est envisageable, par exemple, afin de donner plus de poids au groupe d'injecteurs sains qui semblent avoir une caractéristique de débit identique, d'utiliser une moyenne quadratique plutôt que la moyenne arithmétique sur le calcul des coefficients d'erreur relatifs $\beta_{inj,X}$ de manière à faire dévier de manière réduite le groupe d'injecteurs qui semble sain ou cohérent. Cette solution a toutefois un coût en termes de temps de calcul pour l'unité électronique et informatique et n'est pas indispensable.

Il est aussi envisageable d'exprimer les défauts observés sous d'autres formes telles qu'un débit de fuite par injecteur plutôt qu'un rapport, ou d'exprimer un défaut moyen global dans la rampe (en volume ou en masse) avant d'en déduire un défaut sur chaque injecteur, relatif au défaut moyen dans la rampe de distribution.

Ces solutions ne présentent cependant pas de réel avantage vis-à-vis de la représentation du système ou vis-à-vis de la fonctionnalité.

On notera enfin que le procédé de pilotage visera à combler les écarts entre les erreurs d'estimation de caractéristique masse/temps d'ouverture des injecteurs. Le rapport air/carburant ne sera donc maîtrisé dans chaque cylindre que si l'estimation de la quantité d'air admise est elle aussi connue cylindre par cylindre et si, comme indiqué précédemment, la quantité de carburant est correctement corrigée par un régulateur utilisant l'information de richesse moyenne à l'échappement.

Dans un autre mode de réalisation, le moteur du véhicule automobile pourrait comporter au moins trois groupes d'injecteurs et un nombre correspondant de cylindres, les groupes d'injecteurs étant commandés de telle sorte que l'injection de carburant soit réalisée simultanément par deux groupes d'injecteurs différents dans deux cylindres correspondants.

À titre d'exemple, on a représenté sur la figure 3, dans le cas du moteur 10 à combustion interne de la figure 1, en fonction du temps t et pour un cycle complet du moteur 10 à combustion interne de la figure 1, les consignes de quantité de carburant $Q^{(0)}_{inj,X}$ (avec X = A, B, C, ou D) injectées respectivement par les quatre injecteurs 15A, 15B, 15C, 15D dans ce nouveau mode de réalisation.

On observe sur cette figure 3 que, par exemple, l'injection de carburant dans le premier cylindre 16A se superpose temporellement avec l'injection de carburant dans le deuxième cylindre 16B (voir zone hachurée AB), et également avec l'injection de carburant (pour le cycle-moteur précédent) dans le quatrième cylindre 16D (voir zone hachurée DA).

Il en est de même pour les autres injections.

Le procédé de diagnostic et le procédé de pilotage précédemment décrit peut être mis en oeuvre de la même façon dans ce nouveau mode de réalisation, à la condition de changer les relations R1, R2, et R3 précédentes.

En particulier, la consigne de volume de carburant $V^{(0)}_{pump}$ à pomper est liée, pour une phase d'injection où plusieurs injecteurs 15X (avec X = A, B, C, ou D) reçoivent une consigne de quantité de carburant $Q^{(0)}_{inj,X}$, à ces consignes de quantité de carburant $Q^{(0)}_{inj,X}$ par la relation :

$$V^{(0)}_{pump} = (\Sigma_X Q^{(0)}_{inj,X}) / \rho_{carb}, \text{ (relation R'1)}$$

où $\Sigma_X Q^{(0)}_{inj,X}$ représente la somme des consignes de quantité de carburant $Q^{(0)}_{inj,X}$ injecté simultanément par les injecteurs 15X.

De la même manière, la valeur estimée $P_{2,e}$ est calculée en fonction de la valeur mesurée $P_{1,m}$ de la première pression $P_{ramp}(t_1)$ grâce à la relation :

$$P_{2,e} = P_{1,m} + [V^{(0)}_{pump} - (\Sigma_X Q^{(0)}_{inj,X}) / \rho_{carb}] * (\chi / V_{ramp}), \text{ (relation R'2)}$$

Enfin, dans le cas d'injections simultanées par un groupe d'injecteurs, l'écart de masse $\varepsilon_{carb}$ est rapporté à la somme des consignes de quantité de carburant à injecter par le groupe d'injecteurs correspondant au cylindre considéré lors de chaque première opération du procédé de diagnostic.

De plus, afin de répartir l'écart de masse $\varepsilon_{carb}$ entre les injecteurs 15X (X= A, B, C, ou D) injectant simultanément, on calcule les coefficients d'erreur $\alpha_{inj,X}$ par la relation :

$$\alpha_{inj,X} = (Q^{(0)}_{inj,X} / \Sigma_X Q^{(0)}_{inj,X}) * [\varepsilon_{carb} / (\Sigma_X Q^{(0)}_{inj,X})] \text{ (relation R'3)}.$$

Ce coefficient d'erreur $\alpha_{inj,X}$ traduit ainsi le décalage de débit d'injection des injecteurs 15X. Il est fonction de la différence de la valeur estimée $P_{2,e}$ et la valeur mesurée $P_{2,m}$ de ladite deuxième pression via l'écart de masse $\varepsilon_{carb}$, et des consignes de quantité de carburant $Q^{(0)}_{inj,X}$ (X = A, B, C, ou D).

Moyennant ces changements d'expression dans les relations R'1, R'2, et R'3, les différentes opérations du procédé de diagnostic et les différentes étapes du procédé de pilotage sont identiques.

**Revendications**

1. Procédé de diagnostic de l'état de fonctionnement d'au moins trois groupes d'au moins un injecteur (15A, 15B, 15C, 15D) de carburant adaptés respectivement à injecter du carburant (11C) dans un nombre correspondant de cylindres (16A, 16B, 16C, 16D) d'un moteur à combustion interne (10), ledit moteur à combustion interne (10) comportant une ligne d'injection comprenant une pompe de carburant (13) connectée auxdits groupes d'injecteurs (15A, 15B, 15C, 15D) *via* une rampe de distribution (14) de carburant,
   ledit procédé étant **caractérisé en ce qu'**il comporte :

   - une première opération qui est mise en oeuvre pour chaque cylindre (16A, 16B, 16C, 16D) considéré et qui comprend des étapes consistant à :

     a) acquérir une valeur mesurée ($P_{1,m}$) d'une première pression dans ladite rampe de distribution (14),
     b) injecter du carburant (11C) dans le cylindre (16A, 16B, 16C, 16D) considéré grâce au groupe d'injecteurs (15A, 15B, 15C, 15D) correspondant selon une consigne de quantité de carburant ($Q^{(0)}_{inj,A}$, $Q^{(0)}_{inj,B}$, $Q^{(0)}_{inj,C}$, $Q^{(0)}_{inj,D}$) déterminée,
     c) estimer une valeur estimée ($P_{2,e}$) d'une deuxième pression dans ladite rampe de distribution (14) à l'issue de l'étape b), en fonction de ladite valeur mesurée ($P_{1,m}$) de la première pression,
     d) acquérir une valeur mesurée ($P_{2,m}$) de ladite deuxième pression,
     e) comparer ladite valeur estimée ($P_{2,e}$) avec ladite valeur mesurée ($P_{2,m}$) de la deuxième pression, et déduire un coefficient d'erreur ($\alpha_{inj,A}$, $\alpha_{inj,B}$, $\alpha_{inj,C}$, $\alpha_{inj,D}$) associé audit cylindre (16A, 16B, 16C, 16D) considéré en fonction de la différence de la valeur estimée ($P_{2,e}$) et la valeur mesurée ($P_{2,m}$) de ladite deuxième pression et desdites consignes de quantité de carburant ($Q^{(0)}_{inj,A}$, $Q^{(0)}_{inj,B}$, $Q^{(0)}_{inj,C}$, $Q^{(0)}_{inj,D}$), et

     - une deuxième opération de comparaison des coefficients d'erreur ($\alpha_{inj,A}$, $\alpha_{inj,B}$, $\alpha_{inj,C}$, $\alpha_{inj,D}$) associés auxdits cylindres (16A, 16B, 16C, 16D) et de détection d'un éventuel dysfonctionnement de l'un au moins desdits groupes d'injecteurs (15A, 15B, 15C, 15D).

2. Procédé de diagnostic selon la revendication 1, selon lequel, lors de l'étape e), on déduit de ladite comparaison un résultat intermédiaire qu'on mémorise dans un registre qui associe à chaque injection de carburant dans le cylindre (16A, 16B, 16C, 16D) considéré ledit résultat intermédiaire, et on déduit le coefficient d'erreur ($\alpha_{inj,A}$, $\alpha_{inj,B}$, $\alpha_{inj,C}$, $\alpha_{inj,D}$) à partir d'au moins deux résultats intermédiaires obtenus pour ledit cylindre (16A, 16B, 16C, 16D) considéré et mémorisés dans ledit registre.

3. Procédé de diagnostic selon l'une des revendications 1 à 2, comportant une troisième opération d'enregistrement dans une mémoire informatique d'un indicateur du groupe d'injecteurs (15A, 15B, 15C, 15D) présentant un dysfonctionnement.

4. Procédé de pilotage d'au moins trois groupes d'injecteurs (15A, 15B, 15C, 15D) de carburant adaptés respectivement à injecter du carburant (11C) dans un nombre correspondant de cylindres (16A, 16B, 16C, 16D) d'un moteur à combustion interne (10), ledit moteur à combustion interne (10) comportant une ligne d'injection qui comprend une pompe de carburant (13) connectée auxdits groupes d'injecteurs (15A, 15B, 15C, 15D) *via* une rampe de distribution (14) de carburant, ledit procédé de pilotage comportant des étapes consistant à :

i) élaborer pour chaque groupe d'injecteurs (15A, 15B, 15C, 15D) une consigne de quantité de carburant ($Q^{(0)}_{inj,A}$, $Q^{(0)}_{inj,B}$, $Q^{(0)}_{inj,C}$, $Q^{(0)}_{inj,D}$) à injecter dans le cylindre (16A, 16B, 16C, 16D) correspondant,
ii) détecter un éventuel groupe d'injecteurs (15A, 15B, 15C, 15D) défectueux selon le procédé de diagnostic de l'une des revendications 1 à 3, et, si un groupe d'injecteurs (15A, 15B, 15C, 15D) défectueux est détecté,
iii) corriger, en fonction des coefficients d'erreur ($\alpha_{inj,A}$, $\alpha_{inj,B}$, $\alpha i_{nj,C}$, $\alpha_{inj,D}$) déduits lors dudit procédé de diagnostic de l'étape ii) précédente, les consignes de quantité de carburant ($Q^{(0)}_{inj,A}$, $Q^{(0)}_{inj,B}$, $Q^{(0)}_{inj,C}$, $Q^{(0)}_{inj,D}$) des injecteurs (15A, 15B, 15C, 15D) dudit groupe d'injecteurs (15A, 15B, 15C, 15D) défectueux.

5. Procédé de pilotage selon la revendication 4, selon lequel :

- lors de la deuxième opération du procédé de diagnostic mis en oeuvre à l'étape ii), on détermine, pour chaque cylindre (16A, 16B, 16C, 16D) considéré un coefficient d'erreur relatif ($\beta_{inj,A}$, $\beta_{inj,B}$, $\beta_{inj,C}$, $\beta_{inj,D}$) qui est égal au rapport entre le coefficient d'erreur ($\alpha_{inj,A}$, $\alpha_{inj,B}$, $\alpha_{inj,C}$, $\alpha_{inj,D}$) du cylindre (16A, 16B, 16C, 16D) considéré et une valeur moyenne ($\alpha_m$) des coefficients d'erreurs ($\alpha_{inj,A}$, $\alpha_{inj,B}$, $\alpha_{inj,C}$, $\alpha_{inj,D}$) de tous les groupes d'injecteurs (15A, 15B, 15C, 15D), et
- la correction de l'étape iii) est réalisée en fonction desdits coefficients d'erreur relatifs ($\beta_{inj,A}$, $\beta_{inj,B}$, $\beta_{inj,C}$, $\beta_{inj,D}$).

6. Ensemble d'injection de carburant pour un moteur à combustion interne (10) comportant :

- au moins trois groupes d'injecteurs (15A, 15B, 15C, 15D) de carburant adaptés respectivement à injecter du carburant (11C) dans un nombre correspondant de cylindres (16A, 16B, 16C, 16D),
- une ligne d'injection comprenant une pompe de carburant (13) connectée auxdits groupes d'injecteurs (15A, 15B, 15C, 15D) *via* une rampe de distribution (14) de carburant,
- des moyens de mesure de pression (17) délivrant un signal relatif à la pression ($P_{ramp}$) dans ladite rampe de distribution (14), et
- une unité électronique et informatique (18) adaptée à :

- commander ladite pompe de carburant (13),
- commander lesdits groupes d'injecteurs (15A, 15B, 15C, 15D) pour que chaque groupe d'injecteurs (15A, 15B, 15C, 15D) injecte dans le cylindre (16A, 16B, 16C, 16D) correspondant du carburant (11C) selon une consigne de quantité de carburant ($Q^{(0)}_{inj,A}$, $Q^{(0)}_{inj,B}$, $Q^{(0)}_{inj,C}$, $Q^{(0)}_{inj,D}$) déterminée, et
- traiter le signal délivré par lesdits moyens de mesure de pression (17),

**caractérisé en ce que** ladite unité électronique et informatique (18) est adaptée à mettre en oeuvre un procédé de diagnostic selon l'une des revendications 1 à 3 pour détecter un groupe d'injecteurs (15A, 15B, 15C, 15D) défectueux.

7. Ensemble d'injection de carburant selon la revendication 6, dans lequel l'unité électronique et informatique (18) est programmée pour corriger, en fonction des coefficients d'erreur ($\alpha_{inj,A}$, $\alpha_{inj,B}$, $\alpha_{inj,C}$, $\alpha_{inj,D}$), les consignes de quantité de carburant ($Q^{(0)}_{inj,A}$, $Q^{(0)}_{inj,B}$, $Q^{(0)}_{inj,C}$, $Q^{(0)}_{inj,D}$) de chaque groupe d'injecteurs (15A, 15B, 15C, 15D) défectueux détecté.

8. Moteur à combustion interne (10) comportant :

- un ensemble d'injection de carburant selon l'une des revendications 6 et 7, et
- un nombre correspondant de cylindres (16A, 16B, 16C, 16D).

9. Véhicule automobile comportant un moteur à combustion interne (10) selon la revendication 8.

**Patentansprüche**

1.  Verfahren zur Diagnose des Betriebszustands von mindestens drei Gruppen von mindestens einer Kraftstoffeinspritzdüse (15A, 15B, 15C, 15D), die je geeignet sind, Kraftstoff (11C) in eine entsprechende Anzahl von Zylindern (16A, 16B, 16C, 16D) eines Verbrennungsmotors (10) einzuspritzen, wobei der Verbrennungsmotor (10) eine Einspritzleitung aufweist, die eine Kraftstoffpumpe (13) enthält, die mit den Gruppen von Einspritzdüsen (15A, 15B, 15C, 15D) über eine Kraftstoff-Verteilerrampe (14) verbunden ist, wobei das Verfahren **dadurch gekennzeichnet ist, dass** es aufweist:

    - einen ersten Vorgang, der für jeden betrachteten Zylinder (16A, 16B, 16C, 16D) durchgeführt wird und Schritte enthält, die darin bestehen:

    a) einen gemessenen Wert ($P_{1,m}$) eines ersten Drucks in der Verteilerrampe (14) zu erfassen,
    b) Kraftstoff (11C) mit Hilfe der entsprechenden Gruppe von Einspritzdüsen (15A, 15B, 15C, 15D) gemäß einem bestimmten Kraftstoffmengen-Sollwert ($Q^{(0)}_{inj,A}$, $Q^{(0)}_{inj,B}$, $Q^{(0)}_{inj,C}$, $Q^{(0)}_{inj,D}$) in den betrachteten Zylinder (16A, 16B, 16C, 16D) einzuspritzen,
    c) einen geschätzten Wert ($P_{2,e}$) eines zweiten Drucks in der Verteilerrampe (14) nach dem Schritt b) abhängig vom gemessenen Wert ($P_{1,m}$) des ersten Drucks zu schätzen,
    d) einen gemessenen Wert ($P_{2,m}$) des zweiten Drucks zu erfassen,
    e) den geschätzten Wert ($P_{2,e}$) mit dem gemessenen Wert ($P_{2,m}$) des zweiten Drucks zu vergleichen, und einen dem betrachteten Zylinder (16A, 16B, 16C, 16D) zugeordneten Fehlerkoeffizienten ($\alpha_{inj,A}$, $\alpha_{inj,B}$, $\alpha_{inj,C}$, $\alpha_{inj,D}$) abhängig von der Differenz des geschätzten Werts ($P_{2,e}$) und des gemessenen Werts ($P_{2,m}$) des zweiten Drucks und der Kraftstoffmengen-Sollwerte ($Q^{(0)}_{inj,A}$, $Q^{(0)}_{inj,B}$, $Q^{(0)}_{inj,C}$, $Q^{(0)}_{inj,D}$) abzuleiten, und

    - einen zweiten Vorgang des Vergleichs der den Zylindern (16A, 16B, 16C, 16D) zugeordneten Fehlerkoeffizienten ($\alpha_{inj,A}$, $\alpha_{inj,B}$, $\alpha_{inj,C}$, $\alpha_{inj,D}$) und der Erfassung einer möglichen Funktionsstörung mindestens einer der Gruppen von Einspritzdüsen (15A, 15B, 15C, 15D).

2.  Diagnoseverfahren nach Anspruch 1, wobei während des Schritts e) ein Zwischenergebnis vom Vergleich abgeleitet wird, das in einem Register gespeichert wird, das jeder Kraftstoffeinspritzung in den betrachteten Zylinder (16A, 16B, 16C, 16D) das Zwischenergebnis zuordnet, und der Fehlerkoeffizient ($\alpha_{inj,A}$, $\alpha_{inj,B}$, $\alpha_{inj,C}$, $\alpha_{inj,D}$) ausgehend von mindestens zwei für den betrachteten Zylinder (16A, 16B, 16C, 16D) erhaltenen und im Register gespeicherten Zwischenergebnissen abgeleitet wird.

3.  Diagnoseverfahren nach einem der Ansprüche 1 bis 2, das einen dritten Vorgang des Speicherns eines Anzeigers der Gruppe von Einspritzdüsen (15A, 15B, 15C, 15D) enthält, die eine Funktionsstörung aufweist.

4.  Verfahren zum Steuern von mindestens drei Gruppen von Kraftstoff-Einspritzdüsen (15A, 15B, 15C, 15D), die je geeignet sind, Kraftstoff (11C) in eine entsprechende Anzahl von Zylindern (16A, 16B, 16C, 16D) eines Verbrennungsmotors (10) einzuspritzen, wobei der Verbrennungsmotor (10) eine Einspritzleitung aufweist, die eine Kraftstoffpumpe (13) enthält, die mit den Gruppen von Einspritzdüsen (15A, 15B, 15C, 15D) über eine Kraftstoff-Verteilerrampe (14) verbunden ist, wobei das Steuerverfahren Schritte aufweist, die darin bestehen:

    i) für jede Gruppe von Einspritzdüsen (15A, 15B, 15C, 15D) einen Kraftstoffmengen-Sollwert ($Q^{(0)}_{inj,A}$, $Q^{(0)}_{inj,B}$, $Q^{(0)}_{inj,C}$, $Q^{(0)}_{inj,D}$) auszuarbeiten, der in den entsprechenden Zylinder (16A, 16B, 16C, 16D) einzuspritzen ist,
    ii) eine mögliche defekte Gruppe von Einspritzdüsen (15A, 15B, 15C, 15D) gemäß dem Diagnoseverfahren eines der Ansprüche 1 bis 3 zu erfassen, und wenn eine defekte Gruppe von Einspritzdüsen (15A, 15B, 15C, 15D) erfasst wird,
    iii) abhängig von den während des Diagnoseverfahrens des vorhergehenden Schritts ii) abgeleiteten Fehlerkoeffizienten ($\alpha_{inj,A}$, $\alpha_{inj,B}$, $\alpha_{inj,C}$, $\alpha_{inj,D}$) die Kraftstoffmengen-Sollwerte ($Q^{(0)}_{inj,A}$, $Q^{(0)}_{inj,B}$, $Q^{(0)}_{inj,C}$, $Q^{(0)}_{inj,D}$) der Einspritzdüsen (15A, 15B, 15C, 15D) der defekten Gruppe von Einspritzdüsen (15A, 15B, 15C, 15D) zu korrigieren.

5.  Steuerverfahren nach Anspruch 4, wobei:

    - beim zweiten Vorgang des im Schritt ii) durchgeführten Diagnoseverfahrens für jeden betrachteten Zylinder (16A, 16B, 16C, 16D) ein relativer Fehlerkoeffizient ($\beta_{inj,A}$, $\beta_{inj,B}$, $\beta_{inj,C}$, $\beta_{inj,D}$) bestimmt wird, der gleich dem Verhältnis zwischen dem Fehlerkoeffizienten ($\alpha_{inj,A}$, $\alpha_{inj,B}$, $\alpha_{inj,C}$, $\alpha_{inj,D}$) des betrachteten Zylinders (16A, 16B, 16C, 16D) und einem Mittelwert ($\alpha_m$) der Fehlerkoeffizienten ($\alpha_{inj,A}$, $\alpha_{inj,B}$, ($\alpha_{inj,C}$, $\alpha_{inj,D}$) aller Gruppen von Einspritzdüsen (15A, 15B, 15C, 15D) ist, und

- die Korrektur des Schritts iii) abhängig von den relativen Fehlerkoeffizienten ($\beta_{inj,A}$, $\beta_{inj,B}$, $\beta_{inj,C}$, $\beta_{inj,D}$) durchgeführt wird.

6. Kraftstoff-Einspritzeinheit für einen Verbrennungsmotor (10), die aufweist:

- mindestens drei Gruppen von Kraftstoff-Einspritzdüsen (15A, 15B, 15C, 15D), die geeignet sind, Kraftstoff (11C) in eine entsprechende Anzahl von Zylindern (16A, 16B, 16C, 16D) einzuspritzen,
- eine Einspritzleitung, die eine Kraftstoffpumpe (13) enthält, die mit den Gruppen von Einspritzdüsen (15A, 15B, 15C, 15D) über eine Kraftstoff-Verteilerrampe (14) verbunden ist,
- Druckmesseinrichtungen (17), die ein Signal bezüglich des Drucks ($P_{ramp}$) in der Verteilerrampe (14) liefern, und
- eine Elektronik- und EDV-Einheit (18), die geeignet ist:

- die Kraftstoffpumpe (13) zu steuern,
- die Gruppen von Einspritzdüsen (15A, 15B, 15C, 15D) so zu steuern, dass jede Gruppe von Einspritzdüsen (15A, 15B, 15C, 15D) Kraftstoff (11C) gemäß einem bestimmten Kraftstoffmengen-Sollwert ($Q^{(0)}_{inj,A}$, $Q^{(0)}_{inj,B}$, $Q^{(0)}_{inj,C}$, $Q^{(0)}_{inj,D}$) in den entsprechenden Zylinder (16A, 16B, 16C, 16D) einspritzt, und
- das von den Druckmesseinrichtungen (17) gelieferte Signal zu verarbeiten,

**dadurch gekennzeichnet, dass** die Elektronik- und EDV-Einheit (18) geeignet ist, ein Diagnoseverfahren nach einem der Ansprüche 1 bis 3 durchzuführen, um eine defekte Gruppe von Einspritzdüsen (15A, 15B, 15C, 15D) zu erfassen.

7. Kraftstoff-Einspritzeinheit nach Anspruch 6, wobei die Elektronik- und EDV-Einheit (18) programmiert ist, um abhängig von den Fehlerkoeffizienten ($\alpha_{inj,A}$, $\alpha_{inj,B}$, $\alpha_{inj,C}$, $\alpha_{inj,D}$) die Kraftstoffmengen-Sollwerte ($Q^{(0)}_{inj,A}$, $Q^{(0)}_{inj,B}$, $Q^{(0)}_{inj,C}$, $Q^{(0)}_{inj,D}$) jeder erfassten defekten Gruppe von Einspritzdüsen (15A, 15B, 15C, 15D) zu korrigieren.

8. Verbrennungsmotor (10), der aufweist:

- eine Kraftstoff-Einspritzeinheit nach einem der Ansprüche 6 und 7, und
- eine entsprechende Anzahl von Zylindern (16A, 16B, 16C, 16D).

9. Kraftfahrzeug, das einen Verbrennungsmotor (10) nach Anspruch 8 aufweist.

**Claims**

1. Method for diagnosing the state of operation of at least three groups of at least one fuel injector (15A, 15B, 15C, 15D) which are designed respectively to inject fuel (11C) into a corresponding number of cylinders (16A, 16B, 16C, 16D) of an internal combustion engine (10), the said internal combustion engine (10) comprising an injection line comprising a fuel pump (13) connected to the said groups of injectors (15A, 15B, 15C, 15D) via a fuel distribution rail (14),
the said method being **characterized in that** it comprises:

- a first operation which is implemented for each cylinder (16A, 16B, 16C, 16D) concerned and which comprises steps consisting in:

a) acquiring a measured value ($P_{1,m}$) of a first pressure in the said distribution rail (14),
b) injecting fuel (11C) into the cylinder (16A, 16B, 16C, 16D) concerned using the corresponding group of injectors (15A, 15B, 15C, 15D) according to a determined fuel quantity setpoint ($Q^{(0)}_{inj,A}$, $Q^{(0)}_{inj,B}$, $Q^{(0)}_{inj,C}$, $Q^{(0)}_{inj,D}$,),
c) estimating an estimated value ($P_{2,e}$) of a second pressure in the said distribution rail (14) at the end of step b), as a function of the said measured value ($P_{1,m}$) of the first pressure,
d) acquiring a measured value ($P_{2,m}$) of the said second pressure,
e) comparing the said estimated value ($P_{2,e}$) with the said measured value ($P_{2,m}$) of the second pressure, and deducing an error factor ($\alpha_{inj,A}$, $\alpha_{inj,B}$, $\alpha_{inj,C}$, $\alpha_{inj,D}$) associated with the said cylinder (16A, 16B, 16C, 16D) concerned as a function of the difference between the estimated value ($P_{2,e}$) and the measured value

$(P_{2,m})$ of the said second pressure and of the said fuel quantity setpoints $(Q^{(0)}_{inj,A}, Q^{(0)}_{inj,B}, Q^{(0)}_{inj,C}, Q^{(0)}_{inj,D})$ and

- a second operation of comparing the error factors $(\alpha_{inj,A}, \alpha_{inj,B}, \alpha_{inj,C}, \alpha_{inj,D})$ associated with the said cylinders (16A, 16B, 16C, 16D) and detecting a potential malfunctioning of at least one of the said groups of injectors (15A, 15B, 15C, 15D).

2. Diagnostics method according to Claim 1, whereby, during step e), an intermediate result is deduced from the said comparison and stored in a register which associates the said intermediate result with each injection of fuel into the cylinder (16A, 16B, 16C, 16D) concerned, and the error factor $(\alpha_{inj,A}, \alpha_{inj,B}, \alpha_{inj,C}, \alpha_{inj,D})$ is deduced from at least two intermediate results obtained for the said cylinder (16A, 16B, 16C, 16D) concerned and stored in the said register.

3. Diagnostics method according to one of Claims 1 and 2, comprising a third operation of recording in a computer memory an indicator of the group of injectors (15A, 15B, 15C, 15D) that is exhibiting a malfunctioning.

4. Method for controlling at least three groups of fuel injectors (15A, 15B, 15C, 15D) respectively designed to inject fuel (11C) into a corresponding number of cylinders (16A, 16B, 16C, 16D) of an internal combustion engine (10), the said internal combustion engine (10) comprising an injection line which comprises a fuel pump (13) connected to the said groups of injectors (15A, 15B, 15C, 15D) via a fuel distribution rail (14), the said control method comprising steps consisting in:

i) formulating, for each group of injectors (15A, 15B, 15C, 15D) a fuel quantity setpoint $(Q^{(0)}_{inj,A}, Q^{(0)}_{inj,B}, Q^{(0)}_{inj,C}, Q^{(0)}_{inj,D})$ to be injected into the corresponding cylinder (16A, 16B, 16C, 16D),
ii) detecting a potential group of defective injectors (15A, 15B, 15C, 15D) using the diagnostics method of one of Claims 1 to 3 and, if a group of defective injectors (15A, 15B, 15C, 15D) is detected,
iii) correcting, as a function of the error factors $(\alpha_{inj,A}, \alpha_{inj,B}, \alpha_{inj,C}, \alpha_{inj,D})$ deduced during the said diagnostics method of the preceding step ii), the fuel quantity setpoints $(Q^{(0)}_{inj,A}, Q^{(0)}_{inj,B}, Q^{(0)}_{inj,C}, Q^{(0)}_{inj,D})$ of the injectors (15A, 15B, 15C, 15D) of the said group of defective injectors (15A, 15B, 15C, 15D).

5. Control method according to Claim 4, whereby:

- during the second operation of the diagnostics method implemented in step ii), there is determined, for each cylinder (16A, 16B, 16C, 16D) concerned, a relative error factor $(\beta_{inj,A}, \beta_{inj,B}, \beta_{inj,C}, \beta_{inj,D})$ which is equal to the ratio between the error factor $(\alpha_{inj,A}, \alpha_{inj,B}, \alpha_{inj,C}, \alpha_{inj,D})$ of the cylinder (16A, 16B, 16C, 16D) concerned and a mean value $(\alpha_m)$ of the error factors $(\alpha_{inj,A}, \alpha_{inj,B}, \alpha_{inj,C}, \alpha_{inj,D})$ of all the groups of injectors (15A, 15B, 15C, 15D), and
- correction in step iii) is performed as a function of the said relative error factors $(\beta_{inj,A}, \beta_{inj,B}, \beta_{inj,C}, \beta_{inj,D})$.

6. Fuel injection assembly for an internal combustion engine (10) comprising:

- at least three groups of fuel injectors (15A, 15B, 15C, 15D) respectively designed to inject fuel (11C) into a corresponding number of cylinders (16A, 16B, 16C, 16D),
- an injection line comprising a fuel pump (13) connected to the said groups of injectors (15A, 15B, 15C, 15D) via a fuel distribution rail (14),
- pressure measuring means (17) delivering a signal relating to the pressure $(P_{ramp})$ in the said distribution rail (14), and
- an electronic and computing unit (18) designed to:

- operate the said fuel pump (13),
- operate the said groups of injectors (15A, 15B, 15C, 15D) such that each group of injectors (15A, 15B, 15C, 15D) injects into the corresponding cylinder (16A, 16B, 16C, 16D) fuel (11C) in accordance with a determined fuel quantity setpoint $(Q^{(0)}_{inj,A}, Q^{(0)}_{inj,B}, Q^{(0)}_{inj,C}, Q^{(0)}_{inj,D})$, and
- processing the signal delivered by the said pressure measuring means (17),

**characterized in that** the said electronic and computing unit (18) is designed to implement a diagnostics method according to one of Claims 1 to 3 in order to detect a group of defective injectors (15A, 15B, 15C, 15D).

7. Fuel injection assembly according to Claim 6, in which the electronic and computing unit (18) is programmed to correct, as a function of the error factors ($\alpha_{inj,A}$, $\alpha_{inj,B}$, $\alpha_{inj,C}$, $\alpha_{inj,D}$), the fuel quantity setpoints ($Q^{(0)}_{inj,A}$, $Q^{(0)}_{inj,B}$, $Q^{(0)}_{inj,C}$, $Q^{(0)}_{inj,D}$) of each group of defective injectors (15A, 15B, 15C, 15D) detected.

8. Internal combustion engine (10) comprising:

   - a fuel injection assembly according to one of Claims 6 and 7, and
   - a corresponding number of cylinders (16A, 16B, 16C, 16D) .

9. Motor vehicle comprising an internal combustion engine (10) according to Claim 8.

## Fig.1

## Fig.2A

## Fig.2B

## Fig.2C

## Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2449706 A
- EP 0860600 A

- JP 8338292 B